# FASCICULE DE BREVET EUROPEEN

(11) **EP 3 072 384 B1**
(45) Date de publication et mention de la délivrance du brevet: **14.05.2025**
(21) Numéro de dépôt: 16305331.7
(22) Date de dépôt: 23.03.2016
(51) Int. Cl.: A01G 18/10, A01G 22/20, A01G 22/00, C05F 11/08

(54) **PROCÉDÉ DE CULTURE SUR UNE PARCELLE DE PLANTES DE CULTURE ANNUELLE**
ANBAUVERFAHREN AUF EINER PARZELLE FÜR PFLANZEN ZUM JÄHRLICHEN ANBAU
METHOD FOR GROWING ANNUAL CROPS ON A PLOT

(30) Priorité: 24.03.2015 FR 1552448
(43) Date de publication de la demande: 28.09.2016
(73) Titulaire: CERIENCE, 49250 Beaufort-en-Anjou (FR); Danstar Ferment AG, 6300 Zug (CH)
(72) Inventeur: DAVID, Denis, 37120 La Tour-Saint-Gelin (FR); GRATADOU, Philippe, 86190 Frozes (FR)
(74) Mandataire: Jacobacci Coralis Harle

(56) Documents cités:
- WO-A1-2014/160826
- WO-A1-2014/160826
- CA-A1- 2 461 261
- CA-A1- 2 461 261
- CA-C- 1 335 434
- CA-C- 1 335 434
- US-A- 5 484 464
- US-A- 5 484 464

## Description

### DOMAINE TECHNIQUE AUQUEL SE RAPPORTE L'INVENTION

La présente invention concerne les techniques pour la culture de plantes de culture annuelle, avantageusement les cultures dites de vente ou les cultures dites de rente. CA 1335434C divulgue un procédé de culture sur une parcelle de plantes de culture annuelle.

### ARRIERE-PLAN TECHNOLOGIQUE

Le rendement optimum des plantes de culture annuelle, avantageusement les cultures de vente ou les cultures de rente, est actuellement recherché par le respect de certaines pratiques culturales qui touchent principalement : le semis, le désherbage, la protection contre les bio-agresseurs et la fertilisation.

Pour participer à cette productivité optimale, il est également possible de s'appuyer sur une technique consistant à cultiver ces plantes de culture en association avec des plantes dites « plantes de couvert végétal ».

Cette approche, couramment dénommée « culture associée », a pour but :
- de générer une biomasse importante, apte à étouffer les adventices, sans toutefois pénaliser le développement des plantes de culture,
- de permettre une amélioration de la structure du sol dès l'implantation, et
- d'assurer une fourniture d'azote, pour au final optimiser le rendement des plantes de culture.

Toujours pour participer à cette productivité optimale, il peut être intéressant d'utiliser le phénomène de « mycorhize » produit par les champignons mycorhiziens du sol, c'est-à-dire une symbiose non pathogène entre certains champignons et les racines de diverses plantes.

Les champignons mycorhiziens sont des champignons symbiotiques des plantes, normalement présents naturellement dans les sols.

La mycorhize stimule la croissance de la plante, particulièrement dans les sols pauvres, car le mycélium du champignon retient plus longtemps l'humidité et permet donc une meilleure absorption de l'eau et des éléments nutritifs par les racines. En retour, le champignon retire de la plante les divers éléments carbonés dont il a besoin.

Ce champignon mycorhizien est ainsi destiné à inoculer le système racinaire de la plante lors de son développement sur la parcelle de culture, en vue d'améliorer son développement, sa résistance au stress, etc. et donc son rendement.

Toutefois, le développement de certaines pratiques agricoles (travail de sol, pesticides, engrais chimiques) a fortement contribué à la régression, voire à l'éradication, de ces micro-organismes.

Il est alors possible de rapporter un champignon mycorhizien soit sur les graines des plantes de culture annuelle, soit dans les fertilisants (notamment organiques).

Cependant, les effets positifs de la mycorhization ne sont pas optimums du fait du temps nécessaire au développement et à l'implantation du champignon mycorhizien, et notamment de ses mycéliums, dans le sol de la parcelle.

Le coût de cette technique est en plus élevé à ce jour, compte tenu des quantités de champignons mycorhiziens nécessaires pour obtenir un effet significatif.

Il est donc intéressant de disposer de nouvelles techniques agronomiques qui soient aptes à améliorer encore le rendement de telles plantes de culture annuelle et à améliorer le retour sur investissement.

### OBJET DE L'INVENTION

La présente invention concerne un nouveau procédé de culture qui permet d'augmenter le rendement de plantes de culture annuelle grâce à des microorganismes rhizosphériques.

Ce procédé de culture utilise des graines de couvert végétal comprenant des graines d'au moins une légumineuse sur lesquelles est appliqué au moins un microorganisme rhizosphérique.

Les plantes de couvert végétal se développent sur la parcelle de culture, et elles assurent alors un rôle d'« hôte » permettant une augmentation du taux de microorganismes rhizosphériques dans le sol de cette parcelle.

Les plantes de culture annuelle peuvent ensuite être semées sur cette parcelle « mycorhizée ».

Ces plantes de culture annuelle sont alors inoculées plus efficacement et rapidement par les microorganismes rhizosphériques qui ont eu le temps de se développer et de coloniser le sol.

Le rendement de ces plantes de culture est ainsi significativement amélioré.

Cette technique permet ainsi la création de conditions favorables au développement de la plante de culture annuelle semée postérieurement au couvert végétal.

En l'espèce, l'invention concerne un procédé selon les caractéristiques de la revendication 1.

Selon d'autres caractéristiques techniques avantageuses, pouvant être prises en combinaison ou indépendamment :
- ledit au moins un microorganisme rhizosphérique est choisi parmi les champignons mycorhiziens et/ou les rhizobactéries (en particulier les « PGPR » pour « Plant Growth Promoting Rhizobacteria ») ;
- le procédé de culture comprend une opération d'application dudit au moins un microorganisme rhizosphérique sur lesdites graines de couvert végétal, préalablement à l'opération de semis de graines de couvert végétal ;
- les graines de couvert végétal comprennent des graines d'une seule variété de légumineuse, ou des graines d'un mélange d'au moins deux variétés de légumineuse, sur lesquelles est appliqué ledit au moins un microorganisme rhizosphérique ;
- ledit au moins un microorganisme rhizosphérique est choisi parmi les champignons mycorhiziens aptes à développer des endomycorhizes avec les plantes du couvert végétal, de préférence les champignons mycorhiziens choisis parmi *Glomus intraradices* (encore appelé *Rhizophagus irregularis*) ;
- lesdits champignons mycorhiziens, appliqués sur les graines de couvert végétal, comprennent des propagules sous forme de mycéliums, de spores ou de vésicules ;
- les graines de plantes de culture annuelle sont choisies parmi les graines de céréales (en particulier le maïs, le blé, l'orge, le sorgho), d'oléo-protéagineux, de cultures maraichères, de cultures industrielles, de protéagineux ;
- l'opération de semis de graines de couvert végétal est effectuée soit durant la période interculture, entre deux cycles de culture de plantes de culture annuelle, soit associée à des plantes de culture annuelle, ou sous couvert de plantes de culture annuelle, d'un cycle de culture préalable ;
- l'opération de semis de graines desdites plantes de culture annuelle est mise en œuvre après destruction, ou sans destruction, des plantes du couvert végétal ;
- les graines de légumineuses du couvert végétal sont choisies parmi les genres *Trifolium,* notamment les trèfles, ou *Vicia,* notamment la vesce.

L'opération de semis de graines des plantes de culture annuelle est suivie par un cycle de culture (développement et récolte) desdites plantes de culture annuelle.

### DESCRIPTION DETAILLEE DE L'INVENTION

La présente invention concerne une nouvelle technique d'associations végétales qui est apte à améliorer le rendement de plantes de culture annuelle.

Cette nouvelle technique agronomique consiste à utiliser des graines de couvert végétal, comprenant des graines d'au moins une légumineuse sur lesquelles est appliqué au moins un microorganisme rhizosphérique, qui sont semées sur une parcelle préalablement à des graines de la plante de culture annuelle.

Cette approche permet de préparer le sol, de sorte à augmenter le taux du microorganisme rhizosphérique dans le sol de la parcelle et ainsi à optimiser l'inoculation des plantes de culture annuelle implantées par la suite.

### Sur les plantes de culture annuelle

La présente invention s'applique à la culture de plantes de culture annuelle.

Par « plantes de culture annuelle », on entend en particulier les plantes pour la culture dite de « vente » ou de « rente ».

De telles plantes de culture « annuelle » englobent les plantes annuelles proprement dites, mais aussi les plantes pluriannuelles.

Ces plantes de culture annuelle englobent avantageusement :
- les plantes dites de grandes cultures, notamment les céréales et les oléo-protéagineux,
- les plantes de culture maraichère (sous serre ou en plein champ),
- les plantes de culture industrielle, notamment pommes de terre, betteraves, etc.,
- les protéagineux, notamment pois, féverole, lupin.

Les céréales englobent en particulier le maïs, le blé, l'orge, l'avoine et le sorgho.

Les oléo-protéagineux englobent en particulier le tournesol, le colza, le lin et le soja.

Les cultures maraichères englobent en particulier les pommes de terre, les haricots, les carottes, les betteraves.

### Sur les plantes de couvert végétal

Par « couvert végétal », on désigne l'ensemble des végétaux aptes à recouvrir le sol de manière permanente ou de manière temporaire.

Ces plantes de couvert végétal sont avantageusement choisies parmi les « légumineuses », c'est-à-dire des plantes de la famille des Fabacées ou *Fabaceae* ou *Leguminosae.*

Les légumineuses constituent un vecteur idéal du fait qu'elles sont favorables à la vie biologique du sol, et aux fortes colonisations mycorhiziennes.

Parmi les légumineuses, les plantes sont avantageusement choisies parmi la sous-famille des *Faboideae* ou *Papilionoideae.*

Dans cette dernière sous-famille, les plantes sont avantageusement choisies parmi les genres :
- *Trifolium,* notamment les trèfles ;
- *Vicia,* notamment la vesce.

Les graines de couvert végétal peuvent être mises en œuvre :
- « en pure », c'est-à-dire des graines d'une seule variété de légumineuses, ou
- « en association », c'est-à-dire comprenant les graines d'au moins une variété de légumineuses en combinaison avec d'autres espèces complémentaires.

### Sur le microorganisme rhizosphérique

Au moins un microorganisme rhizosphérique est appliqué sur ces graines de légumineuses.

Ce microorganisme rhizosphérique est choisi parmi les microorganismes rhizosphériques « polyvalents », qui sont aptes à inoculer à la fois les plantes issues des graines de couvert végétal et les plantes de culture annuelle, et qui sont bénéfiques à la croissance et à la santé de ces plantes.

Par « microorganisme rhizosphérique », on entend en particulier les rhizobactéries et/ou les champignons mycorhiziens.

Les champignons mycorhiziens sont avantageusement choisis parmi les champignons mycorhiziens aptes à développer des endomycorhizes avec les plantes inoculées.

Par « endomycorhizes », on entend en particulier une symbiose entre la racine d'une plante et des champignons, les hyphes de ces derniers s'infiltrant à l'intérieur des cellules racinaires, dans l'espace intracellulaire.

Parmi les champignons mycorhiziens, on choisit en particulier *Glomus intraradices* ou *Rhizophagus irregularis.*

Les rhizobactéries consistent en particulier en des rhizobactéries promotrices de croissance des plantes ou PGPR (Plant Growth Promoting Rhizobacteria) représentant un groupe de bactéries qui colonisent la rhizosphère et qui contribuent à la bonne santé et à la croissance des plantes inoculées.

Par « rhizobactéries », on entend en particulier les rhizobiums, ou rhizobia (genre *Rhizobium*), c'est-à-dire les bactéries aérobies du sol appartenant à la famille des *Rhizobiaceae.* Ces bactéries présentent la capacité d'entrer en symbiose avec les plantes de la famille des fabacées en formant des nodosités.

Les rhizobactéries englobent notamment les bactéries du genre *Bacillus, Pseudomonas* ou *Rhizobium.*

On peut aussi utiliser :
- une seule espèce de microorganismes rhizosphériques, ou
- une combinaison d'au moins deux espèces de microorganismes rhizosphériques.

### Sur les graines de couvert végétal « pré-inoculées »

On met avantageusement en œuvre une opération préliminaire d'application dudit au moins un microorganisme rhizosphérique sur les graines de couvert végétal, préalablement au semis de ces dernières.

Pour cela, les microorganismes rhizosphériques sont appliqués et fixés à la surface des graines de légumineuses, par exemple sous la forme d'un pelliculage ou d'un enrobage de ces graines, ou de simple pulvérisation.

L'application des microorganismes rhizosphériques, sur les graines du couvert végétal, s'effectue par une technique d'application classique en soi, par exemple l'application d'une solution à base de microorganismes rhizosphériques présentés en poudre ou en liquide (par pulvérisation, trempage, pelliculage, pulvérisation, enrobage, etc.).

Dans le cas de champignons mycorhiziens, le microorganisme rhizosphérique se présente avantageusement sous la forme de propagules, c'est-à-dire de mycélium, de spores ou de vésicules.

### Procédé de culture

Le procédé de culture selon l'invention comprend différentes opérations successives.

Les graines de couvert végétal « pré-inoculées » font tout d'abord l'objet d'une opération de semis sur la parcelle de culture.

Cette opération s'effectue de manière classique, par exemple au moyen d'un semoir.

Les graines de couvert végétal sont réparties de manière homogène, ou au moins de manière pratiquement homogène, sur toute la surface de la parcelle, par un semis en ligne ou à la volée.

Cette opération de semis des graines de couvert végétal peut être effectuée :
- soit durant la période interculture, c'est-à-dire entre deux cycles de culture de plantes de culture annuelle (identiques ou différentes),
- soit associée à des plantes de culture annuelle, ou sous couvert de plantes de culture annuelle, au cours d'un cycle de culture préalable.

Les plantes de couvert végétal se développent et s'implantent, constituant alors des plantes hôtes qui sont inoculées par les microorganismes rhizosphériques et qui permettent à ces microorganismes rhizosphériques de se développer au sein du sol de la parcelle.

En particulier, dans le cas de champignons mycorhiziens, le développement conduit à la formation d'un réseau de mycéliums dans le sol.

On obtient ainsi une augmentation du taux de microorganismes rhizosphériques dans le sol de la parcelle, en prévision de l'opération de semis des graines des plantes de culture annuelle sur cette même parcelle.

Par « taux de microorganismes rhizosphériques », on entend en particulier :
- une concentration de microorganismes par mm³ du sol de la parcelle, ou
- un nombre de mycéliums par mm³ du sol de la parcelle.

Par « augmentation du taux de microorganismes rhizosphériques », on entend notamment une augmentation quantitative des microorganismes rhizosphériques dans le sol, par rapport à un sol sans semis préalable de plantes de couvert végétal « pré-inoculées ».

Suite à une phase d'implantation des plantes issues des graines de couvert végétal, une opération de semis des graines de plantes de culture annuelle est mise en œuvre au sein de cette parcelle « mycorhizée ».

Cette opération de semis s'effectue :
- après destruction des plantes du couvert végétal, ou
- sans destruction des plantes du couvert végétal.

Dans le cas d'un semis après destruction, les plantes de légumineuses sélectionnées peuvent être choisies parmi celles qui sont gélives (sensibles au gel).

Ces plantes sont ainsi normalement destinées à être détruites naturellement, par une période hivernale de gel.

Il peut également être prévu de mettre en œuvre une opération de destruction ciblée des plantes légumineuses, par exemple une destruction chimique ou mécanique.

Par « destruction chimique », on entend en particulier l'application d'un herbicide sélectif au sein de la parcelle, pour détruire ces plantes de couvert végétal mais sans nuire aux plantes de culture annuelle ou aux microorganismes rhizosphériques implantés dans le sol.

L'opération de semis des graines de plantes de culture annuelle s'effectue de façon classique, tout en favorisant la bonne survie des microorganismes rhizosphériques dans le sol.

Dans le cas d'un semis sans destruction des plantes du couvert végétal, l'opération de semis consiste en une opération de semis directe des graines, directement dans le couvert végétal.

Au cours du cycle de culture, les plantes de culture annuelle s'implantent sur la parcelle.

Les microorganismes rhizosphériques, ayant préalablement colonisé le sol de la parcelle, vont alors inoculer rapidement et efficacement le système racinaire des plantes de culture annuelle (cela avantageusement pour un coût acceptable).

Dans le cas de champignons mycorhiziens, ces plantes de culture annuelle vont ainsi présenter un taux de mycorhization amélioré, c'est-à-dire avantageusement :
- un pourcentage amélioré de plants mycorhizés, et/ou
- un pourcentage amélioré de racines mycorhizées par plant ou par longueur unitaire, et/ou
- des indices améliorés de mycorhization.

Par « taux de mycorhization amélioré », on entend un taux de mycorhization augmenté avec un semis préalable de plantes de couvert végétal « pré-inoculées », par rapport à une culture sans semis préalable de telles plantes de couvert végétal « pré-inoculées ».

Il est possible d'évaluer quantitativement cette mycorhization, notamment par :
- des observations d'échantillons de racines à la loupe ou au microscope ou
- des analyses chimiques.

Les plantes de culture annuelle sont récoltées à l'issue du cycle de culture, avec un rendement amélioré.

### Exemple

Dans le cas d'une culture annuelle, par exemple d'une rotation entre le blé et le maïs, les graines de couvert végétal « pré-inoculées » sont semées après la récolte du blé (par exemple août/septembre).

Le couvert végétal se développe avant l'hiver et assure le développement des microorganismes rhizosphériques rapportés pendant sa croissance.

Le couvert végétal contribue à augmenter le taux de microorganismes rhizosphériques du sol, pendant cette période d'inter-culture.

La culture suivante, par exemple le maïs, est semée en avril/mai, le plus souvent après destruction du couvert végétal en hiver ou en sortie d'hiver.

Les microorganismes rhizosphériques, ainsi multipliés dans le sol pendant l'interculture, entrent plus rapidement en symbiose avec les racines du maïs et améliorent sa nutrition.

### Avantages

L'intérêt de la technique selon la présente invention porte sur plusieurs aspects :
- nutrition minérale améliorée, en particulier en phosphore,
- résistance au stress biotique et abiotique,
- augmentation de la résistance à la sécheresse,
- effet sur la croissance des plantes très positif,
- protection contre les bactéries et champignons pathogènes,
- un gain de calibre,
- un gain de précocité,
- un taux de mycorhization amélioré.

L'implantation préalable des microorganismes rhizosphériques a également pour avantage d'améliorer les caractéristiques biologiques du sol en vue du développement des plantes de culture annuelle.

## Revendications

1. Procédé de culture sur une parcelle de plantes de culture annuelle, avantageusement une culture de vente ou une culture de rente, lequel procédé de culture consiste à mettre en œuvre au moins les opérations successives suivantes sur ladite parcelle :
- une opération de semis de graines de couvert végétal, comprenant des graines d'au moins une légumineuse sur lesquelles est appliqué au moins un microorganisme rhizosphérique,
lequel au moins un microorganisme rhizosphérique est choisi parmi les microorganismes rhizosphériques qui sont aptes à inoculer des plantes issues desdites graines de couvert végétal et lesdites plantes de culture annuelle,
- suite à une phase d'implantation des plantes issues desdites graines de couvert végétal, une opération de semis de graines desdites plantes de culture annuelle, lesdites plantes issues des graines de couvert végétal étant détruites, de manière naturelle, chimique ou mécanique, et lesdites plantes de culture annuelle étant inoculées par ledit au moins un microorganisme rhizosphérique ayant colonisé le sol.

2. Procédé de culture selon la revendication 1, **caractérisé en ce que** ledit au moins un microorganisme rhizosphérique est choisi parmi les champignons mycorhiziens et/ou les rhizobactéries.

3. Procédé de culture selon la revendication 2, **caractérisé en ce que** ledit au moins un microorganisme rhizosphérique est choisi parmi les champignons mycorhiziens aptes à développer des endomycorhizes avec les plantes du couvert végétal.

4. Procédé de culture selon l'une quelconque des revendications 2 ou 3, **caractérisé en ce que** les champignons mycorhiziens sont choisis parmi *Glomus intraradices* ou *Rhizophagus irregularis.*

5. Procédé de culture selon l'une quelconque des revendications 2 à 4, **caractérisé en ce que** lesdits champignons mycorhiziens, appliqués sur les graines de couvert végétal, comprennent des propagules sous forme de mycéliums, de spores ou de vésicules.

6. Procédé de culture selon l'une quelconque des revendications 1 à 5, **caractérisé en ce qu'**il comprend une opération d'application dudit au moins un microorganisme rhizosphérique sur les graines de couvert végétal, préalablement à l'opération de semis desdites graines de couvert végétal.

7. Procédé de culture selon l'une quelconque des revendications 1 à 6, **caractérisé en ce que** les graines de couvert végétal comprennent :
- des graines d'une seule variété de légumineuse, ou
- des graines d'un mélange d'au moins deux variétés de légumineuse,
sur lesquelles est appliqué ledit au moins un microorganisme rhizosphérique.

8. Procédé de culture selon l'une quelconque des revendications 1 à 7, **caractérisé en ce que** les graines de plante de culture annuelle sont choisies parmi les graines de céréales, d'oléo-protéagineux, de cultures maraichères, de cultures industrielles, de protéagineux.

9. Procédé de culture selon l'une quelconque des revendications 1 à 8, **caractérisé en ce que** l'opération de semis de graines de couvert végétal est effectuée :
- soit durant la période interculture, entre deux cycles de culture de plantes de culture annuelle,
- soit associée à des plantes de culture annuelle, ou sous couvert de plantes de culture annuelle, d'un cycle de culture préalable.

10. Procédé de culture selon l'une quelconque des revendications 1 à 9, **caractérisé en ce que** l'opération de semis de graines desdites plantes de culture annuelle est mise en œuvre après destruction, ou sans destructions des plantes du couvert végétal.

## Patentansprüche

1. Anbauverfahren auf einer Parzelle für Pflanzen zum jährlichen Anbau, vorteilhafterweise ein Anbau für Verkauf oder ein Nutzanbau,
wobei das Anbauverfahren darin besteht, mindestens eine der folgenden aufeinanderfolgenden Aktionen auf der Parzelle durchzuführen:
- eine Aktion des Aussäens von Samen für eine Pflanzendecke, die Samen mindestens einer Hülsenfrucht aufweisen, auf die mindestens ein Rhizosphären-Mikroorganismus angewendet worden ist,
wobei der Rhizosphären-Mikroorganismus unter den Rhizosphären-Mikroorganismen ausgewählt wird, die geeignet sind, Pflanzen, die aus den Samen für eine Pflanzendecke hervorgegangen sind, oder Pflanzen zum jährlichen Anbau zu inokulieren,
- nach einer Phase des Einpflanzens der Pflanzen, die aus den Samen für eine Pflanzendecke hervorgegangen sind, eine Aktion des Aussäens von Samen der Pflanzen zum jährlichen Anbau, wobei die Pflanzen, die aus den Samen für Pflanzen zum jährlichen Anbau auf natürliche, chemische oder mechanische Weise zerstört werden, wobei die Pflanzen zum jährlichen Anbau mit dem mindestens einen Rhizosphären-Mikroorganismus, der den Boden besiedelt hat, inokuliert werden.

2. Anbauverfahren gemäß Anspruch 1, **dadurch gekennzeichnet, daß** der mindestens eine Rhizosphären-Mikroorganismus unter den Mykorrhizapilzen und/oder den rhizobakteriellen Pilzen ausgewählt wird.

3. Anbauverfahren gemäß Anspruch 2, **dadurch gekennzeichnet, daß** der mindestens eine Rhizosphären-Mikroorganismus unter den Mykorrhizapilzen ausgewählt wird, die geeignet sind, bei den Pflanzen für eine Pflanzendecke Endomykorhizen zu entwickeln.

4. Anbauverfahren gemäß einem der Ansprüche 2 oder 3, **dadurch gekennzeichnet, daß** die Mykorrhizapilze unter den *Glomus intraradices* oder den *Rhizophagus irregularis* ausgewählt werden.

5. Anbauverfahren gemäß einem der Ansprüche 2 bis 4, **dadurch gekennzeichnet, daß** die auf die Pflanzen für eine Pflanzendecke angewendeten Mykorrhizapilze Fortpflanzungspartikel in Form von Myzelien, Sporen oder Vesikeln aufweisen.

6. Anbauverfahren gemäß einem der Ansprüche 1 bis 5, **dadurch gekennzeichnet, daß** es eine Aktion der Anwendung des mindestens einen Rhizosphären-Mikroorganismus auf die Samen für eine Pflanzendecke vor der Aktion des Aussäens der Samen für eine Pflanzendecke aufweist.

7. Anbauverfahren gemäß einem der Ansprüche 1 bis 6, **dadurch gekennzeichnet, daß** die Samen für eine Pflanzendecke
- Samen einer einzigen Varietät von Hülsenfrüchten oder
- Samen einer Mischung von mindestens zwei Varietäten von Hülsenfrüchten aufweisen.

8. Anbauverfahren gemäß einem der Ansprüche 1 bis 7, **dadurch gekennzeichnet, daß** die Samen für Pflanzen zum jährlichen Anbau unter den Samen von Getreiden, Öl-Eiweißpflanzen, Gemüse, für industriellen Anbau, von Eiweißpflanzen ausgewählt werden.

9. Anbauverfahren gemäß einem der Ansprüche 1 bis 8, **dadurch gekennzeichnet, daß** die Aktion des Aussäens von Samen für eine Pflanzendecke
- entweder während der Kulturzwischenperiode zwischen zwei Zyklen des Anbaus von Pflanzen für jährlichen Anbau
- oder auf Pflanzen für jährlichen Anbau oder zusammen mit Pflanzen für jährlichen Anbau eines vorangehenden Anbauzyklus angewendet wird.

10. Anbauverfahren gemäß einem der Ansprüche 1 bis 9, **dadurch gekennzeichnet, daß** die Aktion des Aussäens von Samen der Pflanzen für jährlichen Anbau nach der Zerstörung oder ohne Zerstörung der Pflanzen der Pflanzendecke durchgeführt wird.

## Claims

1. Method of growing annual crop plants, preferably a cash crop or a practical use crop, on a plot,
said method of growing consisting in implementing at least the following successive actions on the plot:
- an action of sowing seeds of a plant cover comprising seeds of at least one leguminous plant to which at least one rhizospheric microorganism is applied,
said at least one rhizospheric microorganism being selected amongst the rhizospheric microorganisms that are suitable for inoculating plants which are issued from said seeds for plant cover, and the annual crop plants,
- after a phase of planting plants issued from the seeds for plant cover, an action of sowing seeds of said annual crop plants, said plants issued from seeds for plant cover being destroyed naturally, chemically or mechanically, and the annual crop plants being inoculated with said at least one rhizospheric microorganism occupying the ground.

2. Method of growing according to claim 1, **characterized in that** said at least one rhizospheric microorganism is selected amongst the mycorhizian mushrooms and/or the rhizobacterias.

3. Method of growing according to claim 2, **characterized in that** said at least one rhizospheric microorganism is selected amongst the mycorhizian mushrooms able to develop endomycorizians with the plants of the plant cover.

4. Method of growing according to anyone of claims 2 or 3, **characterized in that** the mycorhizian mushrooms are selected amongst *Glomus intraradices* or *Rhizophagus irregularis.*

5. Method of growing according to anyone of claims 2 to 4, **characterized in that** the mycorhizian mushrooms applied to the seeds of the plant cover comprise propagules such as myceliums, spores or vesicles.

6. Method of growing according to anyone of claims 1 to 5, **characterized in that** it comprises an action of applying said at least one rhizospheric microorganism to the seeds of the plant cover before the action of sowing the seeds of the plant cover.

7. Method of growing according to anyone of claims 1 to 6, **characterized in that** the seeds of the plant cover comprise:
- seeds of a single variety of leguminous plants or
- seeds of a mixture of at least two varieties of leguminous plants,
on which said at least one rhizospheric microorganism is applied.

8. Method of growing according to anyone of claims 1 to 7, **characterized in that** the seeds of annual crop plants are selected amongst seeds for cereal crops, oil seeds and protein crops, vegetable crops, industrial crops, and protein crops.

9. Method of growing according to anyone of claims 1 to 8, **characterized in that** the action of sowing seeds for plant cover is implemented
- either during the period between two cultures, between two culture cycles of annual crop plants,
- or associated with annual crop plants or together with annual crop plants of a previous crops cycle.

10. Method of growing according to anyone of claims 1 to 9, **characterized in that** the action of sowing seeds of said annual crop plants is implemented after destroying or without destroying the plants of the plant cover.
